# EUROPEAN PATENT SPECIFICATION

(11) **EP 3 513 941 B1**
(45) Date of publication and mention of the grant of the patent: **15.03.2023**
(21) Application number: 19151820.8
(22) Date of filing: 30.06.2015
(51) Int. Cl.: B29C 43/18, B29C 43/20, B60R 13/08, B29L 31/30, B29C 43/02

(54) **COMPONENT FOR VEHICLES**
KOMPONENTE FÜR FAHRZEUGE
COMPOSANT POUR VÉHICULES

(30) Priority: 03.07.2014 IT BS20140120
(43) Date of publication of application: 24.07.2019
(62) Divisional of application: 15174701.1
(73) Proprietor: SOLE SCANZOROSCIATE S.P.A., 24020 Scanzorosciate (BG) (IT)
(72) Inventor: ANTONIOLI, Andrea, Nandlstadt (DE); CIONI, Gianni, 50051 Castelfiorentino, Firenze (IT); GARIBOLDI, Gianpietro, 20854 Vedano al Lambro, Monza-Brianza (IT)
(74) Representative: Pulieri, Gianluca Antonio

(56) References cited:
- WO-A1-97/48576
- JP-A- 2013 031 943
- US-A1- 2006 103 171
- US-A1- 2008 067 002
- US-A1- 2009 127 026

## Description

The present invention falls, in general, within the sector of the production of structural components for vehicles; in particular, the invention relates to a component for vehicles, and a method for moulding said component for vehicles and to a particular interposition element used during such moulding method. The present invention also relates to an apparatus for the production of such a component for vehicles.

As is known, methods which allow the production of components or support structures for vehicles with a high resistance but with reduced use of materials and construction times compared to metal, fall within the manufacturing processes of components in thermoplastic material. Examples of such methods are disclosed in documents US2006/103171 A1 and US2008/067002 A1.

In general, the manufacturing method of components for vehicles in thermoplastic material provides for moulding the component by placing the plastic material inside the mould and thermoforming the component thanks to the pressure generated by a press on the mould. Such thermoplastic materials may be, for example, Glass-Mat Thermoplastic (GMT) materials, i.e. thermoplastic materials reinforced with glass fibres, Long Fiber reinforced Thermoplastic (LFT) materials, i.e. thermoplastic materials reinforced with long fibre, or Lightweight Reinforced Thermoplastic (LWRT) materials, namely thermoplastic materials reinforced with glass fibres with a lower specific weight and a higher stiffness/weight ratio than GMT materials.

It is known that, downstream of the moulding step, for some components, such as underbody shields for motor vehicles, it is necessary to fix mechanically or weld in an appropriate manner accessory bodies in plastic material or in metal, so to add auxiliary thermal or mechanical characteristics. In the case of underbody shields, for example, downstream of the moulding process, accessory bodies may be attached (for example absorbers or heat shields for example in aluminium) with special sound and/or heat absorption properties in order to attenuate the noise and/or the heat from the engine of the vehicle towards the inside of the passenger compartment, thus improving comfort for the passengers. Currently such absorbers are fixed to the underbody shields (or panels under the engine or underbody) using different attachment techniques depending on the material they consist of. In the case in which the material of the thermoplastic type is compatible with the material which the underbody panel is made of, such as polyethylene terephthalate (PET), ultrasound (US) spot welding is generally carried out, wherein the materials are thermoplastically welded by means of the local heat generated by the ultrasound. In the case in which the plastic type material (for example polyurethane, PUR) is instead incompatible with the material of the underbody panel, overmoulding techniques in which the plastic material is wrapped in sheets of other compatible plastic material, or mechanical attachment techniques are used. In the case where the absorber is made of metal (for example aluminium), the absorber is glued directly to the underbody panel.

Unfortunately, most of the techniques described above provide for attaching the absorber only after the moulding phase of the underbody shield is completed. These techniques, therefore, permit the attachment of the absorber to the underbody shield only when it has already been moulded and finished, with a considerable increase in costs and production times due to the further post-moulding assembly step.

Recently, a moulding technique provides for the realization of underbody shields in hybrid thermoplastic materials (for example GMT with LWRT) in which the two types of materials are inserted simultaneously in the mould, so that the finished component is made entirely with hybrid materials in a single co-moulding step. However, this technique is not flexible to any changes in the design of the component to be made and involves the construction of ad-hoc moulds with considerable economic disadvantages. For example, in the case of a possible modification of the component when the equipment is completed or in the case of producing two versions of the same component, one in thermoplastic material and another in a hybrid thermoplastic material, a mould with interchangeable inserts needs to be prepared or, alternatively, two different moulds need to be made.

One of the purposes of the present invention is to overcome the limitations of the prior art, eliminating the step subsequent to that of moulding which provides for the attachment of the accessory body to the moulded component for vehicles. This way, the time and costs of this step are eliminated, further helping to improve some thermal and mechanical characteristics of the component for vehicles.

According to the invention, such purpose is achieved by a component for vehicles with the characteristics of the appended independent claims. The method for moulding said component for vehicles, the interposition element, its embodiments and the apparatus for the production of such a component for vehicles are not claimed.

In particular, the component for vehicles according to the invention (such as an underbody), comprises a base having at least partly a layer of thermoplastic material and an accessory body in contact along a contact region with said thermoplastic layer. Moreover, said accessory body is thermoplastically joined to the base, along a contact region at least continuous in parts.

Specifically, the method for producing such a component for vehicles, comprises the step in which the base is positioned in contact with the accessory body along the region of contact with the thermoplastic layer, inside a mould for a press. Such press is suitable to form at least in part the component for vehicles thermoplastically due to the pressure exerted by the press on the mould. In addition, at least one interposition element is placed between a die or a punch of the mould for a press and the accessory body on at least a part of said contact region with the thermoplastic layer, to join said accessory body to the base at said part of the contact region.

In substance, the apparatus for making the component for vehicles comprises a press and a mould for thermoplastic moulding, engaged with the press with the addition of the interposition element having the characteristics described previously.

Preferred embodiments of the invention are defined in the dependent claims.

The characteristics and advantages of the component for vehicles, the moulding method of said component for vehicles, of the interposition element used during such moulding method and of the apparatus for the production of such component for vehicles according to the present invention will be evident from the description given below, by way of a non-limiting example, according to the appended drawings, wherein:
- figure 1 shows a representative diagram of a sequence of steps of the manufacturing method according to an embodiment variant of the present invention;
- figure 2a shows a representative diagram of a sequence of steps of the manufacturing method according to a second embodiment variant of the present invention;
- figure 2b shows a representative diagram of a sequence of steps of the manufacturing method according to another embodiment variant of the present invention;
- figure 2c shows a representative diagram of a sequence of steps of the manufacturing method according to a further embodiment variant of the present invention;

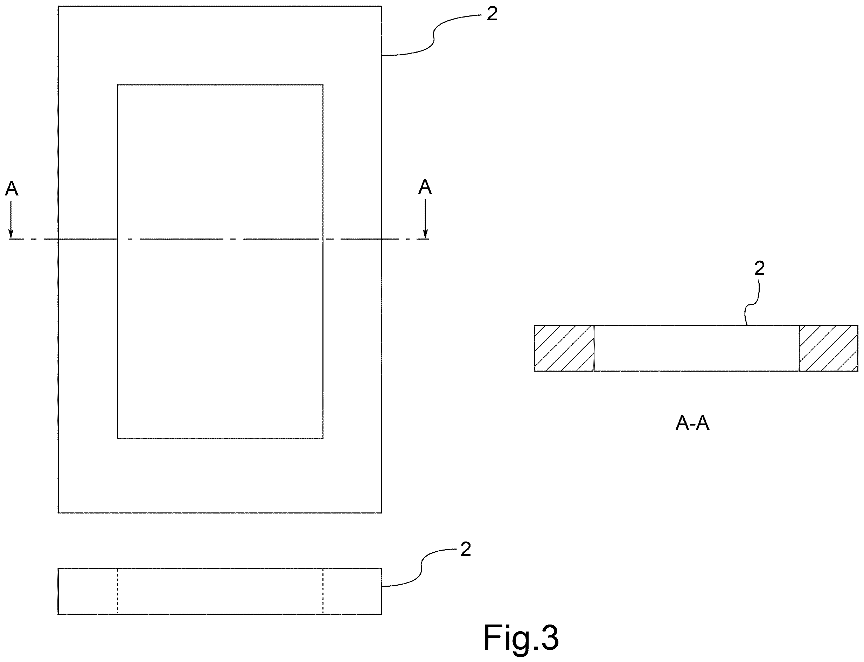

- figure 3 is a view from above, a front view and a cross-section view of an interposition element according to the present invention;

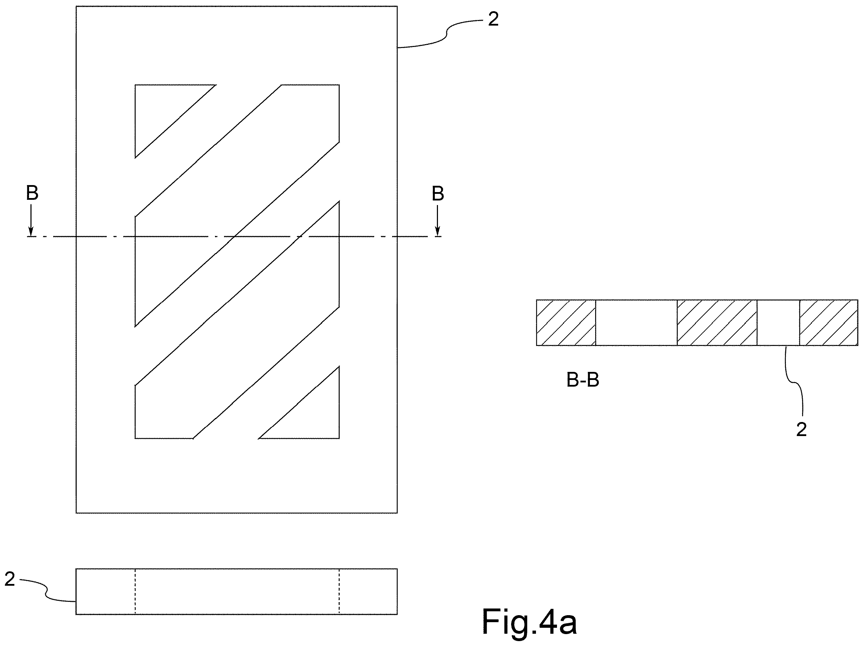

- figure 4a is a view from above, a front view and a cross-section view of an interposition element according to the present invention, in a further embodiment;

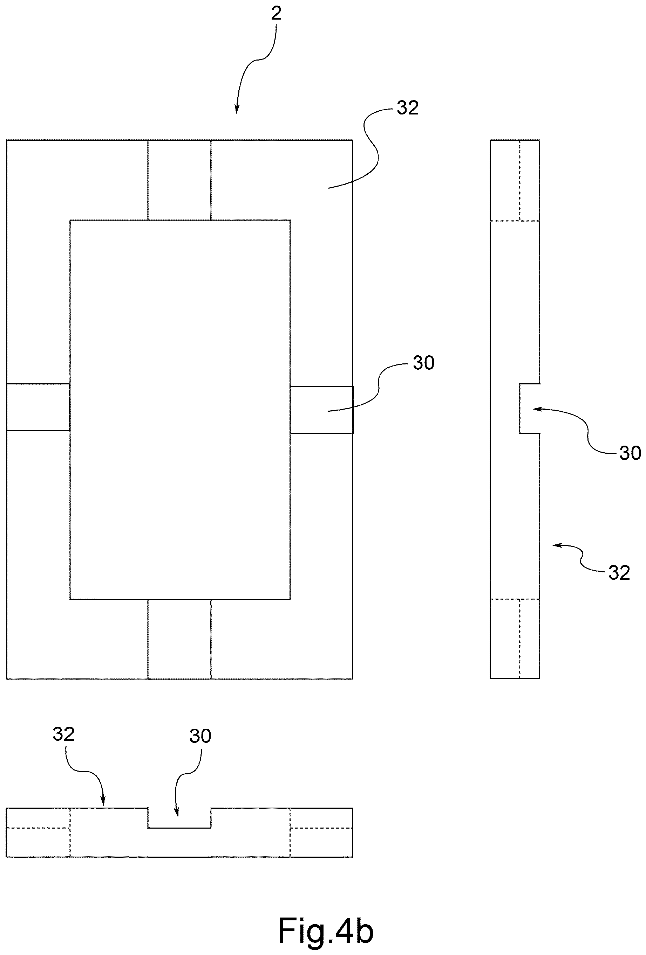

- figure 4b is a view from above, a side view and a front view of an interposition element according to the present invention, in a further embodiment;

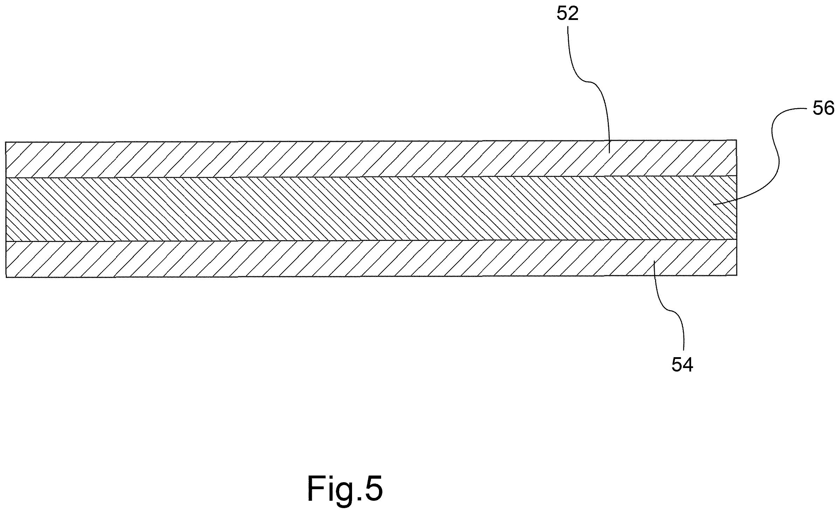

- figure 5 shows a view of an example of layers of a thermoplastic material for making a base, according to the present invention;
- figure 6a shows a view from above, a front view and a cross-section view of an example of superposing an interposition element, an accessory body and an auxiliary element, suitable to be inserted in the mould for the press, according to the present invention;
- figure 6b shows a view from above, a front view and a cross-section view of an example of superposing an interposition element, an accessory body and an auxiliary element, suitable to be inserted in the mould for the press, according to another embodiment of the present invention;

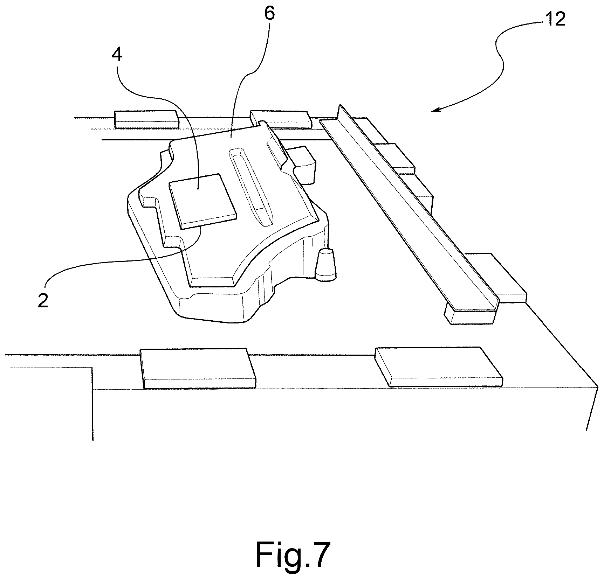

- figure 7 shows an example of positioning of the interposition element - accessory body assembly inside a mould for the moulding press, according to the present invention;
- figure 8a shows a cross-section view of a step of the moulding method according to the present invention in which the mould for the press is in a stage of almost total closure and the interposition element is positioned between the accessory body and the die of the mould;
- figure 8b shows a cross-section view of a step of the moulding method according to another embodiment of the present invention in which the mould for the press is in a stage of almost total closure and the interposition element is positioned between the accessory body and the punch of the mould;
- figure 8c shows a cross-section view of a step of the moulding method according to a further embodiment variant of the present invention in which the mould for the press is in a stage of almost total closure, the interposition element is positioned between the accessory body and the die of the mould and in addition an auxiliary element is interposed between the accessory body and the base of the component for vehicles;
- figure 8d shows a cross-section view of a step of the moulding method according to an additional embodiment of the present invention in which the mould for the press is in a stage of almost total closure and the interposition element is positioned between the die of the mould and the accessory body but not in contact with the accessory body;

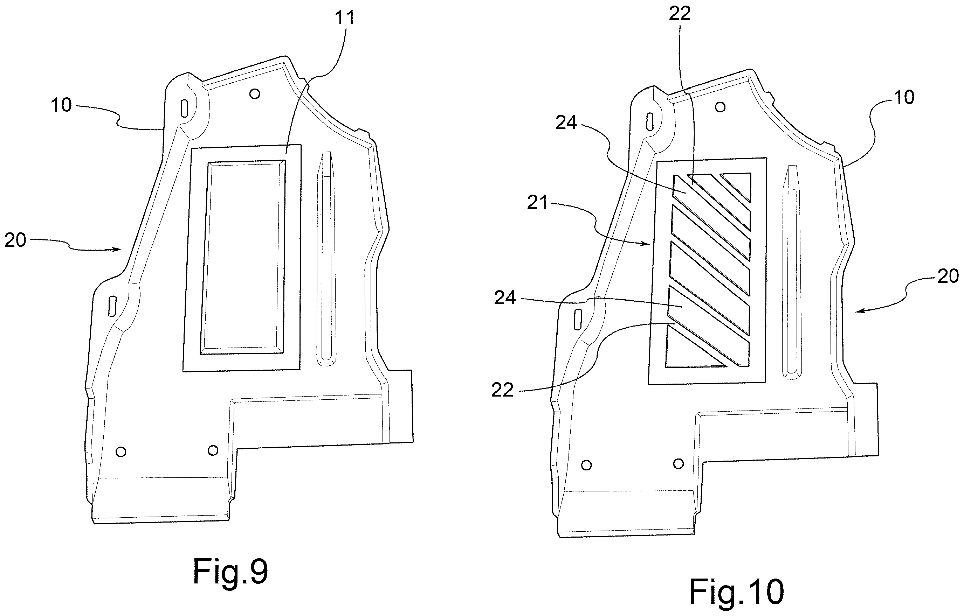

- figure 9 shows a component for vehicles according to an embodiment of the present invention, in which the accessory body is joined to the base of the component for vehicles along a part of the contact region between the accessory body and the base;
- figure 10 shows a component for vehicles according to one embodiment of the present invention;

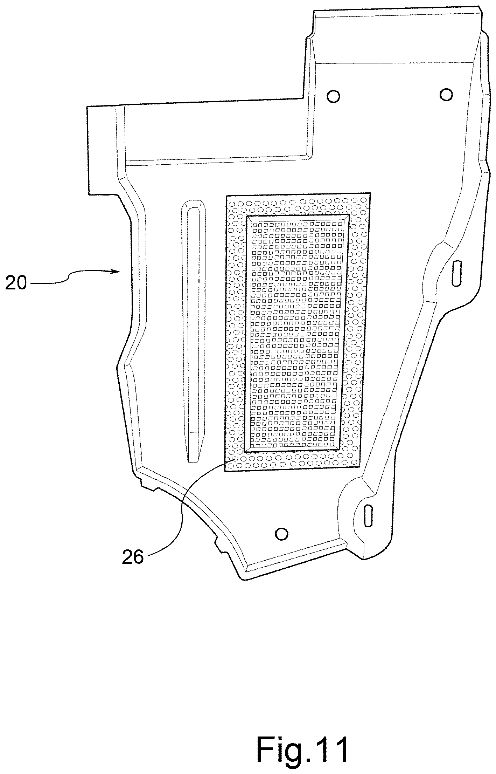

- figure 11 shows a component for vehicles according to a further embodiment of the present invention;
- figure 12a shows a cross-section of a component for vehicles according to an embodiment of the present invention;
- figure 12b, shows the magnification of a detail of the cross-section of a component for vehicles shown in figure 12a.

According to the appended drawings, reference numeral 1 globally denotes a method for producing a component for vehicles 20. Such component 20, once finished, comprises a base 10 constituted in part of a layer of thermoplastic material 52, 54 and an accessory body 4 in contact along a contact region 11 with the thermoplastic layer 52, 54.

For the realization of said component for vehicles 20 the base 10, for example consisting in part of a thermoplastic material as the LWRT, is placed in contact with the accessory body 4 along the contact region 11 with the thermoplastic layer 52, 54 inside the mould for press 12. The press is suitable to form at least in part such component for vehicles 20 thermoplastically, due to the pressure exerted by the press on the mould. An interposition element 2 is interposed, preferably in the direction of relative movement between the die 6 and the punch 8, between the die 6 of the mould and the accessory body 4 or between the punch 8 of the mould and the accessory body 4, in correspondence with at least a part of the contact region 11, to join the accessory body 4 with the base 10 at said part of the contact region 11, preferably in a substantially non-removable manner.

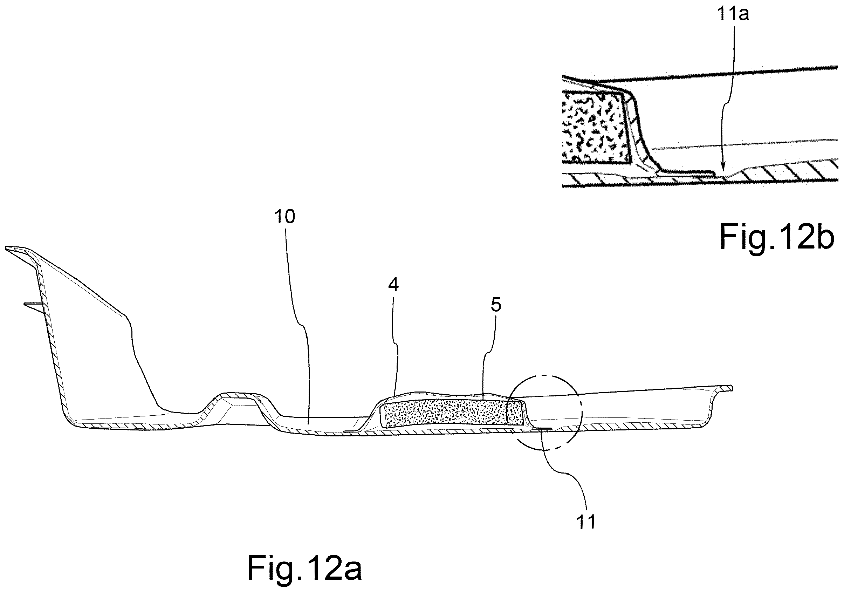

According to the claimed invention, as shown in detail in figure 12b, by effect of the overpressure, at the part of the contact region 11 in which the accessory body 4 is firmly joined to the base 10, the component for vehicles presents a depression 11a, i.e. an area having a reduced thickness compared to the regions of the component for vehicles adjacent to said part of the contact region 11.

In one embodiment of the invention, the interposition element 2 is made in one piece with the punch 8 or with the die 6 of the mould 12. For example, said interposition element 2 may be constituted of an embossed region 9 made on the die 6 or on the punch 8 of the mould 12, for example with the same material which the die 6 or the punch 12 is made of. In this case, the accessory body 4 is positioned inside the mould 12 in such a way that the part of the contact region between the accessory body 4 and the base 10 of the component for vehicles is at the embossed region 9.

In a preferred embodiment, the interposition element 2 is separable from the punch 8 or the die 6 of the mould 12. For example, said interposition element 2 may be a frame or solid object in wood or metal material or any material holding its rigidity at least at temperatures between 100°C and 200°C, of any shape.

In the case in which the interposition element 2 is made in one piece with the die or the punch of the mould, it is preferably necessary for the accessory body to be preheated before being inserted inside the mould or, alternatively, it is preferable to provide heat generator means suitable to heat only the region of the interposition element 2, leaving the remaining area of the punch or the die at a lower temperature (for example between 20°C and 30°C) .

In one embodiment of the method 1, the interposition element 2 is positioned in such a way as to create an overpressure at the part of the contact region 11 between the thermoplastic layer 52, 54 of the base 10 and the accessory body 4 and make it possible to join said accessory body 4 with the base 10 at the part of the contact region 11.

The method 1, preferably comprises the step in which the accessory body 4 joins firmly with the base due to the pressure exerted by the press on the mould 12 and by the latter transferred along the part of the contact region 11 by means of the interposition element 2. This ensures that, the accessory body, such as an acoustic or heat absorber, is welded to the base in a single moulding step, without the need to perform the operation at a stage after the moulding of the base. The co-moulding of the base and of the accessory body thus guarantees a considerable saving of labour costs and of components (e.g. the gluing components, welding equipment etc.)

In a step of the method 1 it is also possible to provide for the creation of concavities 22 and convexities 24 on the accessory body 4 by means of the interposition element 2, so as to convey the sound absorption or heat absorption, for example with the further advantage of improving the characteristics of sound absorption compared to those which said material would have in the absence of said concavities and convexities.

Preferably, a step of the method 1 provides that the heat generated by the heat generation means, for example present on the interposition element 2 in the form of a thermal resistance, is transferred in a localised manner to the accessory body 4 by means of the interposition element 2.

Preferably, the heat generation means comprise, for example, an oven or thermal resistances suitable to heat the interposition element or the accessory body directly. This way, for example, once the interposition element or the accessory body has reached a predefined temperature (for example between 170°C and 180°C), it can be positioned on the base 10 of the component for vehicles 20 inside the mould 12 before the press proceeds with the subsequent thermoforming step, in which the heat accumulated on the interposition element 2 or on the accessory body 4 together with the pressure generated by the press permits the welding of the accessory body 4 to the base 10 along the part of the contact region 11.

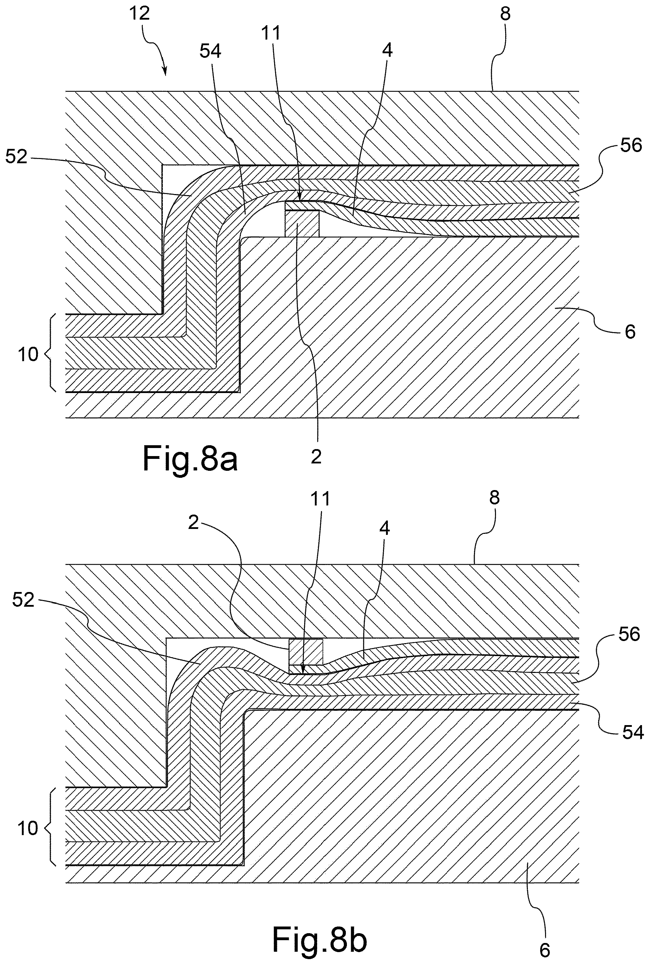

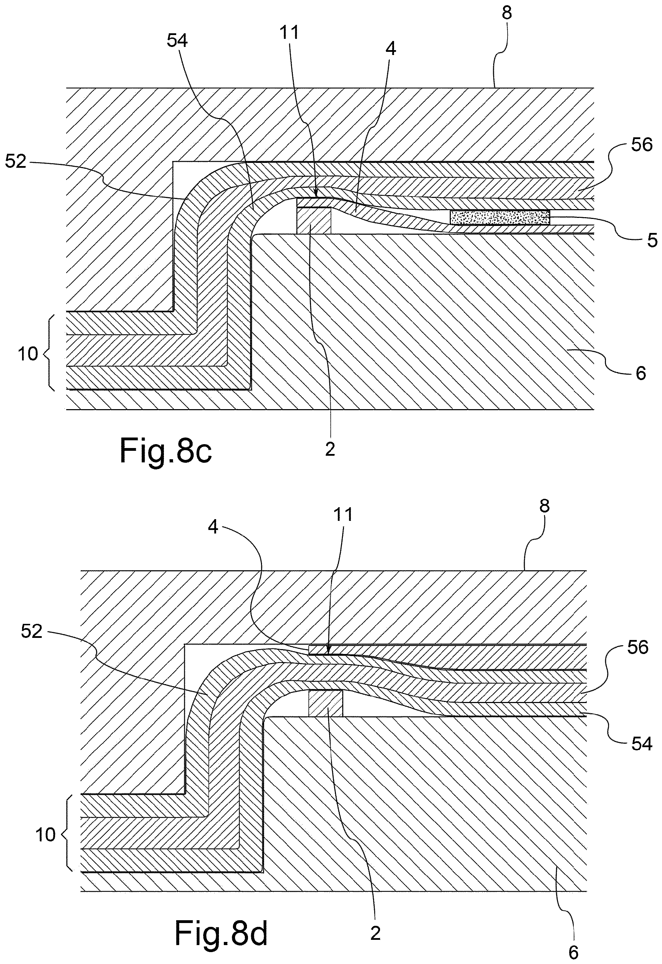

To increase the noise/heat absorption characteristics for example an auxiliary element 5 may be positioned between the accessory body 4 and the base 10, at least partly inside the part of the contact region 11. This auxiliary element 5, may thus also be constituted of a non-thermoplastic material or of a thermoplastic material not compatible with co-moulding on the material which the base 11 consists of, inasmuch as it is not essential for it to be welded thermoplastically to the base, but may remain trapped between the accessory body welded to the base and said base, as shown in Figures 8c and 12.

The method 1 further comprises a step in which, the accessory body 4 is locked to the base 10 by means of holes 26 made on said accessory body 4. For example, during the moulding step the pressure exerted by the press on the mould allows the thermoplastic material of the base to penetrate inside said holes made on the accessory body in such a way as to fix the accessory body to the base mechanically, once the thermoplastic material has cooled. This way it is also possible to co-mould an accessory body in a metal material, such as for example acoustic and/or heat absorbers in aluminium, provided with an appropriate pattern of holes, without the need to provide for an additional gluing step. In this case, for example, the interposition element 2 may be provided with further holes at the holes 26 on the accessory body 4 suitable to allow the escape of the thermoplastic material through the holes 26 of the accessory body 4 towards the face of the accessory body not in contact with the base 10.

Advantageously, moreover, the presence of the interposition element 2 makes it possible for example to use said interposition element 2 as a movement tray for the accessory body 4. In a step of the method, therefore, it is possible to prepare the accessory body 4 on the interposition element 2 and to use said interposition element 2 for example as a guide for centring the accessory body inside the mould 12 of the press.

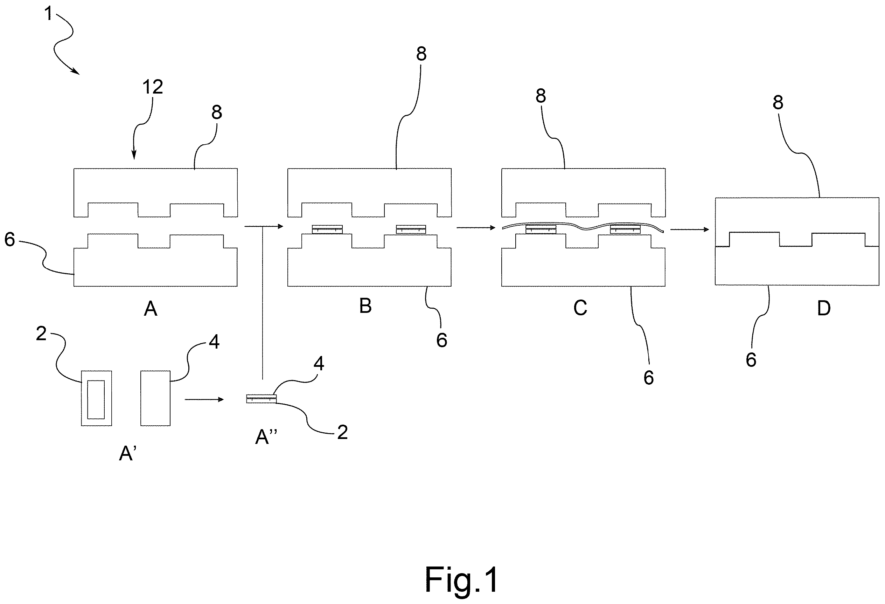

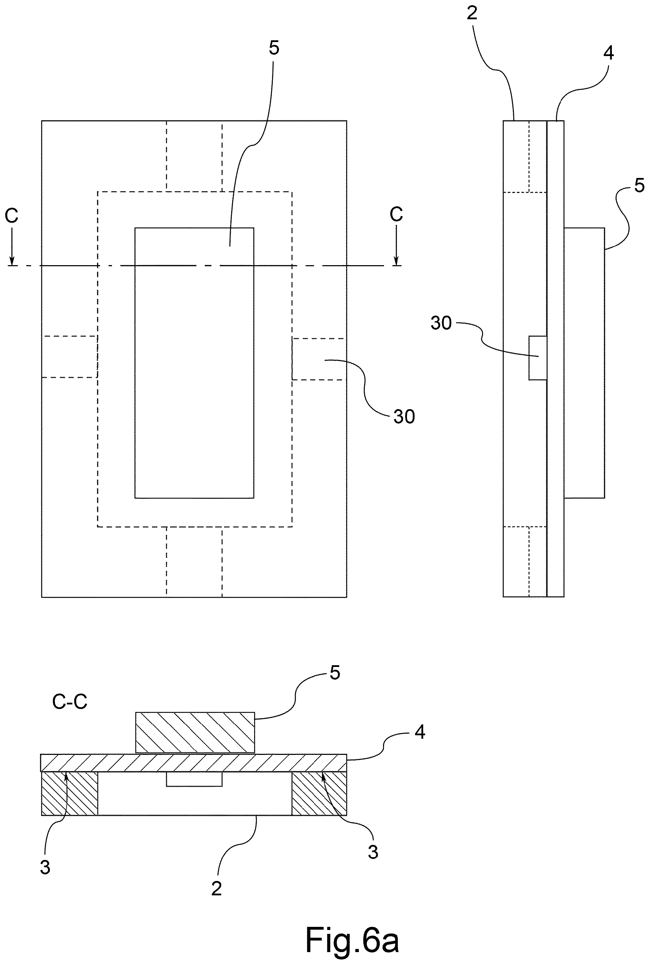

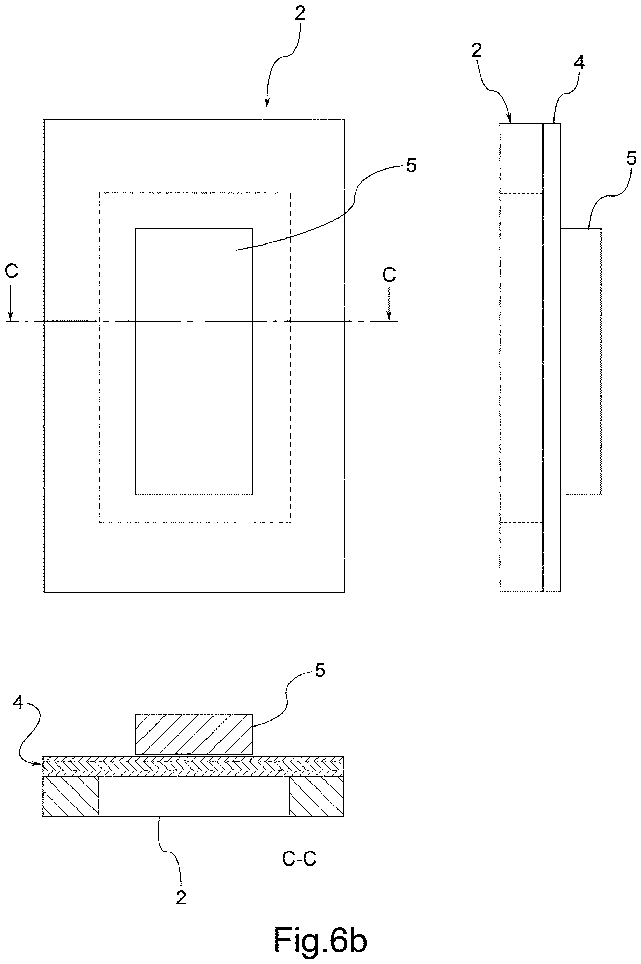

A detailed example of the steps constituting the method according to the present invention is shown in figure 1. Preferably, the method comprises the steps of:
- opening the mould of the press 12 (A);
- preparing the interposition element 2 and accessory body 4 (A');
- positioning the accessory body 4 on the interposition element 2 (A") ; in this step, it is also possible to add the auxiliary element 5 on the accessory body 4, as shown in figures 6a and 6b;
- inserting the interposition element-accessory body assembly inside the mould 12 (B);
- positioning the sheet of thermoplastic material constituting the base 10 in contact with the surface of the accessory body 4 not in contact with the interposition element 2, along a contact region 11 (C); in this step C the accessory body 4 is in contact on one side with the contact region with the sheet of thermoplastic material constituting the base 10 and on the other side with the surface of the interposition element 2 not in contact with the die 6 or punch 8 of the mould.
- closing the mould of the press by the press and thermoforming the component for vehicles (D). During this step, for example, the heat accumulated on the accessory body 4 or on the interposition element 2, together with the pressure exerted by the press, makes it possible to weld the accessory body 4 to the base 10 along the part of the contact region 11.

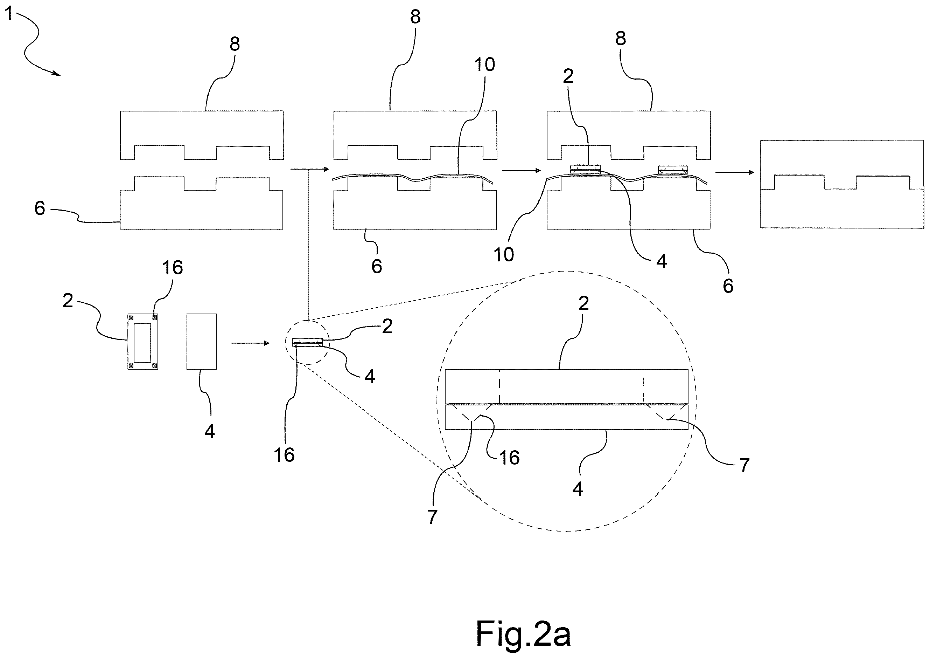

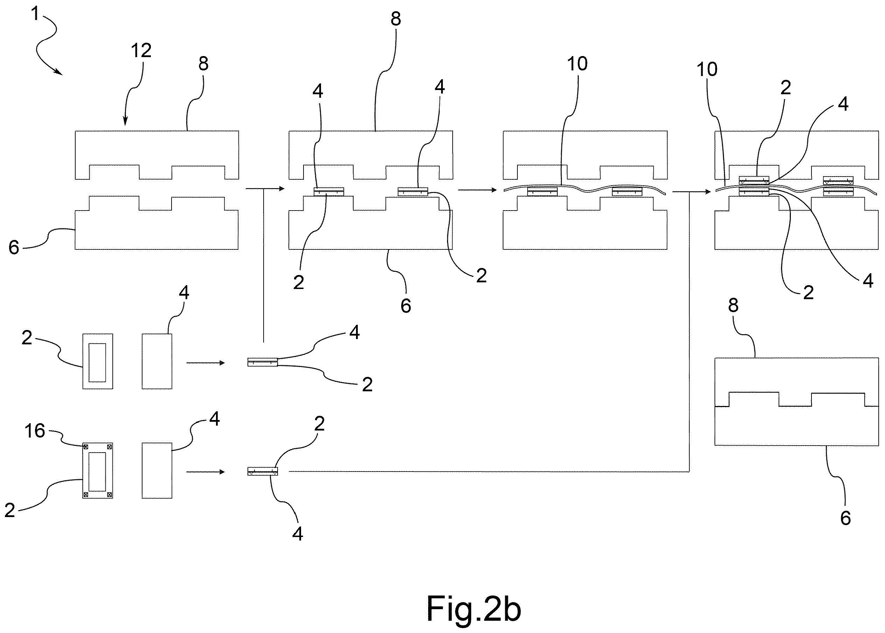

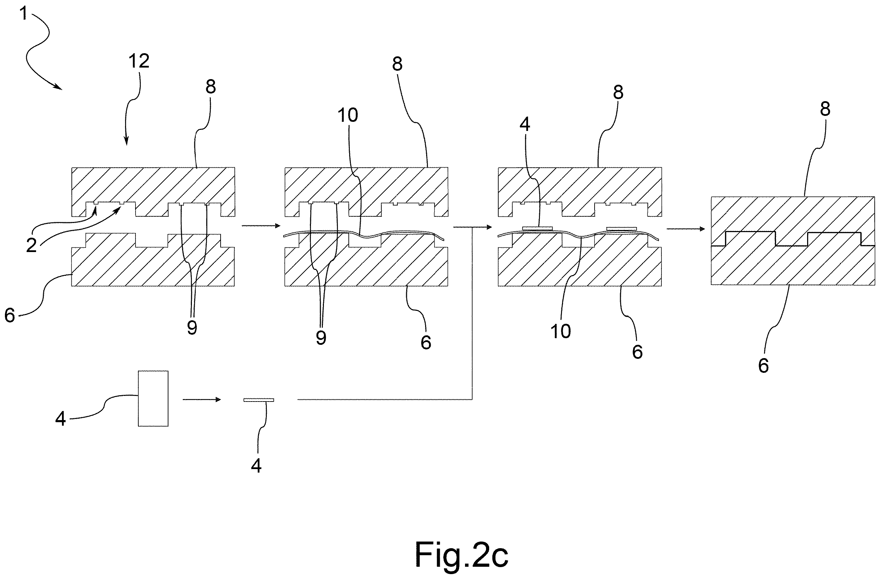

Other detailed examples of the steps constituting the method according to the present invention are shown in figures 2a, 2b and 2c.

Preferably, the base 10 of the component for vehicles 20 is heated in an oven (for example at a temperature of around 170-180°C in the case of a LWRT material) before being inserted inside the mould 12. Moreover, even the interposition element 2 can be heated by means of the heat generation means (ovens, thermic resistances..) before being inserted inside the mould 12(for example during the preparation step of the interposition element 2 and accessory body 4 (A')), or when already present inside the mould 12. This way, said interposition element 2 is able to convey the heat accumulated onto a part of the contact region 11 between the accessory body 4 and the base 10 and thus permit the welding between the accessory body 4 and the base 10 along said part of the contact region 11.

Preferably, before the step of closing the mould, the die 6 and the punch 8 of the mould are kept at a lower temperature than the temperature of the material of the base 10 or of the interposition element 2 or accessory body 4. This way, in fact, in the case in which the base 10 is constituted of LWRT material, the pressure and the lower temperature allow the LWRT material to cool and create the stiffer (and reduced thickness) structural areas of the component for vehicles.

Where, instead, for example, the interposition element 2 is present at a higher temperature a heat sealing is created between the material of the base 10 and the accessory body 4, along the part of the contact region 11, thanks to the region of overpressure created with the interposition element 2 and to the heat transferred from the interposition element 2 onto the accessory body 4.

The interposition element 2, positioned between the die 6 or the punch 8 of the mould for the press 12 and the accessory body 4, on at least a part of the contact region 11 between the accessory body 4 and the base 10 of the component for vehicles 20, is preferably made from materials with greater rigidity than the materials which the base 10, the accessory body 4 and the auxiliary element 5 are made of. For example, said interposition element 2 is made in wood or in metal material, such as aluminium or special aluminium alloys or any material which maintains its stiffness at temperatures above 100°C, such as SMC (Sheet Moulding Compounds) thermosetting materials.

Moreover, the interposition element 2 comprises a plurality of regions 30, 32 with variable thicknesses so that, established a moulding pressure for the thermoforming of the component for vehicles 20, said regions 30, 32 are adapted to create an overpressure on the accessory body 4, said overpressure depending on the thickness of each region 30, 32 and on the contact area 3 of each region with the accessory body 4.

The regions of variable thickness 30, 32 of the interposition element 2 may comprise varying thicknesses depending on the thickness of the material of the base 10, for example, said thicknesses may be less than the thickness of the material of the base (before moulding) or may vary between 2 mm and 10 mm, in the direction substantially parallel to the direction of movement of the punch 8 on the die 6. This way, depending on the pressure exerted on the accessory body by the regions of varying thicknesses 30, 32, concavities and convexities are created on the accessory body 4 and hence different mechanical sound and/or heat absorption properties.

In one embodiment, the interposition element 2 further comprises mechanical means 16, for example tips 7 or hooks, to lock the accessory body 4 to the interposition element 2.

In another embodiment, moreover, the interposition element 2 is constituted at least in part of a material suitable to conduct heat (e.g. aluminium) and to transfer said heat in a localised manner to the accessory body 4, so as to improve the welding between said accessory body 4 and the base 10 of the component for vehicles. For example, an optimal weld is achieved with temperatures of the interposition element above 100°C.

The component for vehicles 20, according to the present invention, is made with a base in LWRT (Lightweight Reinforced Thermoplastic) material onto which an accessory body constituted at least in part of synthetic material such as polypropylene, polyethylene, polyurethane, or polyethylene terephthalate or in metal materials such as aluminium and its alloys, is co-moulded.

An example of a component for vehicle 20 according to the present invention is an underbody shield, wherein the accessory body for example is represented by an acoustic absorber welded simultaneously with the moulding step of the underbody shield.

According to the claimed invention, the accessory body 4 is positioned only on at least one localised region 21 of the base 10.

Preferably, said accessory body 4 is suitable to have sound and/or heat absorption characteristics, for example with the advantage of absorbing the noise and heat generated by a thermal engine of a motor vehicle or the noise from the rolling of the tyres on the road of any wheeled vehicle or by the underbody airflow.

According to a preferred embodiment of the present invention, in addition, the component for vehicles 20 has at least one auxiliary element 5 placed between the accessory body 4 and the base 10, at least in part inside the contact region 11 between said accessory body 4 and the base 10, so as to vary the sound and/or heat absorption 20. For example, the auxiliary element 5 may be made as a parallelepiped in synthetic material (for example polyurethane) placed between the accessory body 4 and the base 10 so as to be trapped between said accessory body 4 and the base 10 of the component for vehicles 20, inside the weld region which acts as boundary of the trap.

Preferably, therefore, the auxiliary element 5 is suitable to have soundproofing or heat absorption characteristics. Said sound or heat absorption characteristics can be varied thanks to the presence of concavities 22 and convexities 24 on the accessory body 4, wherein said concavities 22 and convexities 24 make it possible to convey the sound absorption depending on their geometry.

The apparatus making the component for vehicles described above comprises a press and a mould 12 for thermoplastic moulding, engaged with the press, and an interposition element 2, for example having the characteristics described in the previous paragraphs and intended to be placed between the die 6 or punch 8 of the mould 12 and the accessory body 4, on at least part of the contact region between the accessory body 4 and the base 10 of the component for vehicles.

As may be seen, advantageously, the method according to the present invention makes it possible to co-mould accessory bodies, such as acoustic and thermal absorbers, on a component for vehicles made from thermoplastic material in a single moulding step, without further post-moulding welding steps. Furthermore, in the case in which the interposition element is separable from the die or punch of the mould, the method according to the present invention makes it possible to co-mould absorbers on a component for vehicles made of thermoplastic material without any structural modification of the mould, compared to a solution without absorber, and at the same time allows the maximum flexibility of design and implementation. In the latter case, even more advantageously, any changes to the geometry of the accessory body during the design phase do not therefore require a large investment in modifications to the equipment, thus facilitating the development and testing phase (for example, with the same mould different versions of a single moulded object may be made by combining different types of accessory bodies, according to the needs of the designer).

It is clear that a person skilled in the art may make modifications to the invention described above so as to satisfy specific and contingent requirements, all contained within the scope of protection as defined by the following claims.

## Claims

1. Component for vehicles (20) comprising a base (10) in Lightweight Reinforced Thermoplastic material, consisting at least partly of a layer of thermoplastic material (52, 54), and at least one accessory body (4), wherein the accessory body is thermoplastically joined to the base (10), along a contact region (11) at least piecewise continuous,
said component for vehicles being **characterized in** the fact that the accessory body (4) is constituted at least in part of polypropylene, or polyethylene, or polyurethane, or polyethylene terephthalate,
and wherein said accessory body (4) is positioned only on at least one localised region (21) of the base (10),
and wherein at the part of the contact region (11) in which the accessory body (4) is firmly joined to the base (10), the component for vehicles presents a depression (11a), i.e. a region having a reduced thickness compared to the regions of the component for vehicles (20) adjacent to said part of the contact region (11).

2. Component for vehicles (20) according to claim 1, wherein said component is an underbody shield.

3. Component for vehicles (20) according to any one of the previous claims, wherein the accessory body (4) has sound absorption properties.

4. Component for vehicles (20) according to any one of the previous claims, wherein the accessory body (4) is at least partly made of aluminium.

5. Component for vehicles (20) according to any one of the previous claims, which further comprises at least one auxiliary element (5) positioned between the accessory body (4) and the base (10), at least partly within the contact region (11).

6. Component for vehicles (20) according to claim 5, wherein the at least one auxiliary element (5) has sound absorption properties.

7. Component for vehicles (20) according to any one of the previous claims, wherein the accessory body (4) has a plurality of holes (26), preferably to lock the accessory body (4) on the base (10) thanks to the effect of penetration of part of the layer of thermoplastic material (52, 56) inside said plurality of holes (26).

8. Component for vehicles (20) according to any one of the claims 5 to 7, wherein the auxiliary element (5) is made as a parallelepiped in synthetic material, preferably polyurethane, placed between the accessory body (4) and the base (10) so as to be trapped between said accessory body (4) and the base (10) inside the contact region (11) which acts as boundary of the trap.

## Patentansprüche

1. Komponente für Fahrzeuge (20), umfassend eine Basis (10) aus leichtem, verstärktem thermoplastischem Material, bestehend zumindest teilweise aus einer Schicht aus thermoplastischem Material (52, 54), und zumindest einem Zubehörkörper (4), wobei der Zubehörkörper mit der Basis (10) entlang eines Kontaktbereichs (11) zumindest stückweise durchgehenden thermoplastisch verbunden ist,
wobei die Komponente für Fahrzeuge **dadurch gekennzeichnet ist, dass** der Zubehörkörper (4) zumindest teilweise aus Polypropylen oder Polyethylen oder Polyurethan oder Polyethylenterephthalat besteht,
und wobei der Zubehörkörper (4) nur an bzw. auf zumindest einem lokalisierten Bereich (21) der Basis (10) positioniert ist,
und wobei an dem Teil des Kontaktbereichs (11), in dem der Zubehörkörper (4) fest mit der Basis (10) verbunden ist, die Komponente für Fahrzeuge eine Vertiefung (11a) aufweist bzw. darstellt, d. h. einen Bereich mit einer verringerten Dicke verglichen mit den Bereichen der Komponente für Fahrzeuge (20) benachbart bzw. angrenzend an den Teil des Kontaktbereichs (11).

2. Komponente für Fahrzeuge (20) nach Anspruch 1, wobei die Komponente ein Unterbodenschutz ist.

3. Komponente für Fahrzeuge (20) nach einem der vorhergehenden Ansprüche, wobei der Zubehörkörper (4) Schallabsorptionseigenschaften aufweist.

4. Komponente für Fahrzeuge (20) nach einem der vorhergehenden Ansprüche, wobei der Zubehörkörper (4) zumindest teilweise aus Aluminium besteht.

5. Komponente für Fahrzeuge (20) nach einem der vorhergehenden Ansprüche, die ferner zumindest ein Zusatz- bzw. Hilfselement (5) umfasst, das zwischen dem Zubehörkörper (4) und der Basis (10) positioniert ist, und zwar zumindest teilweise innerhalb des Kontaktbereichs (11).

6. Komponente für Fahrzeuge (20) nach Anspruch 5, wobei das zumindest eine Hilfselement (5) Schallabsorptionseigenschaften aufweist.

7. Komponente für Fahrzeuge (20) nach einem der vorhergehenden Ansprüche, wobei der Zubehörkörper (4) eine Mehrzahl von Löchern (26) aufweist, vorzugsweise um den Zubehörkörper (4) an der Basis (10) zu verriegeln, und zwar aufgrund des Effekts des Eindringens eines Teils der Schicht aus thermoplastischem Material (52, 56) in die Mehrzahl von Löchern (26).

8. Komponente für Fahrzeuge (20) nach einem der Ansprüche 5 bis 7, wobei das Hilfselement (5) als Parallelepiped aus synthetischem Material, vorzugsweise Polyurethan, hergestellt ist, und zwar platziert zwischen dem Zubehörkörper (4) und der Basis (10), um zwischen dem Zubehörkörper (4) und der Basis (10) innerhalb des Kontaktbereichs (11) eingeschlossen zu sein, der als Begrenzung des Einschlusses dient.

## Revendications

1. Composant pour véhicules (20) comprenant une base (10) en matériau thermoplastique renforcé léger, consistant au moins partiellement en une couche de matériau thermoplastique (52, 54), et au moins un corps accessoire (4), dans lequel le corps accessoire est relié de manière thermoplastique à la base (10), le long d'une région de contact (11) au moins continue par morceaux,
ledit composant pour véhicules étant **caractérisé par le fait que** le corps accessoire (4) est constitué au moins en partie de polypropylène, ou de polyéthylène, ou de polyuréthane, ou de polyéthylène téréphtalate,
et dans lequel ledit corps accessoire (4) est positionné uniquement sur au moins une région localisée (21) de la base (10),
et dans lequel au niveau de la partie de la région de contact (11) dans laquelle le corps accessoire (4) est fermement relié à la base (10), le composant pour véhicules présente un renfoncement (11a), c'est-à-dire une région ayant une épaisseur réduite par rapport aux régions du composant pour véhicules (20) adjacentes à ladite partie de la région de contact (11).

2. Composant pour véhicules (20) selon la revendication 1, dans lequel ledit composant est une protection de soubassement.

3. Composant pour véhicules (20) selon l'une quelconque des revendications précédentes, dans lequel le corps accessoire (4) présente des propriétés d'absorption acoustique.

4. Composant pour véhicules (20) selon l'une quelconque des revendications précédentes, dans lequel le corps accessoire (4) est au moins partiellement composé d'aluminium.

5. Composant pour véhicules (20) selon l'une quelconque des revendications précédentes, qui comprend en outre au moins un élément auxiliaire (5) positionné entre le corps accessoire (4) et la base (10), au moins partiellement dans la région de contact (11).

6. Composant pour véhicules (20) selon la revendication 5, dans lequel l'au moins un élément auxiliaire (5) présente des propriétés d'absorption acoustique.

7. Composant pour véhicules (20) selon l'une quelconque des revendications précédentes, dans lequel le corps accessoire (4) présente une pluralité de trous (26), de préférence pour bloquer le corps accessoire (4) sur la base (10) grâce à l'effet de pénétration d'une partie de la couche de matériau thermoplastique (52, 56) à l'intérieur de ladite pluralité de trous (26).

8. Composant pour véhicules (20) selon l'une quelconque des revendications 5 à 7, dans lequel l'élément auxiliaire (5) est créé en tant que parallélépipède en matière synthétique, de préférence en polyuréthane, placé entre le corps accessoire (4) et la base (10) de manière à être piégé entre ledit corps accessoire (4) et la base (10) à l'intérieur de la région de contact (11) qui sert de limite du piège.
